# EUROPEAN PATENT APPLICATION

(11) **EP 3 336 328 A1**
(43) Date of publication of application: **20.06.2018**
(21) Application number: 17200309.7
(22) Date of filing: 07.11.2017
(51) Int. Cl.: F02B 39/14, F01D 25/18, F16C 33/00, F16H 57/04

(54) **TURBOCHARGER FOR INTERNAL COMBUSTION ENGINE AND INTERNAL COMBUSTION ENGINE**

(30) Priority: 14.12.2016 JP 2016242193
(71) Applicant: TOYOTA JIDOSHA KABUSHIKI KAISHA, Toyota-shi, Aichi, 471-8571 (JP)
(72) Inventor: IWATA, Akitoshi, Toyota-shi, Aichi 471-8571 (JP); MAEDA, Osamu, Toyota-shi, Aichi 471-8571 (JP); TANADA, Masayuki, Toyota-shi, Aichi 471-8571 (JP)
(74) Representative: D Young & Co LLP

(57) **Abstract**

A turbocharger (20) includes a turbine wheel (32), a shaft portion (31), and a bearing housing (40). The bearing housing (40) has a drain passage (43) and a drain groove (42). In a state where the turbocharger is mounted an internal combustion engine (10), a connecting portion (51) at which the accommodation space (41) is connected to the drain groove (42) is provided in a fourth region (AR4) located on a lower side (D) with respect to a central axis (41C) of the accommodation space (41). Furthermore, an extension line (42L) of the drain groove (42) and the central axis (41C) are skew lines. The extension line (42L) passes through a third region (AR3) located on an upper side (U) with respect to the central axis (41C).

## Description

### BACKGROUND OF THE INVENTION

### 1. Field of the Invention

The invention relates to a turbocharger for an internal combustion engine including a bearing housing, and an internal combustion engine including the turbocharger.

### 2. Description of Related Art

A turbocharger includes a bearing housing that pivotally supports a shaft coupled to a turbine wheel. Oil is introduced into the bearing housing, and a bearing unit is lubricated. In a bearing housing for a turbocharger, described in Japanese Patent Application Publication No. 2014-034957 (JP 2014-034957 A), an oil drain passage extends to the lower side of the central axis of a shaft hole through which the shaft is inserted, and an oil drain port is open to an oil flange.

### SUMMARY OF THE INVENTION

When oil that is drained from the bearing housing is drained from the shaft hole to the drain passage, the oil receives the influence of centrifugal force that is generated by the rotation of the shaft. Since such centrifugal force acts on oil, oil stays in the shaft hole, and oil can be difficult to be drained from the bearing housing.

A first aspect of the invention is a turbocharger for an internal combustion engine. The turbocharger includes a turbine wheel, a shaft portion coupled to the turbine wheel, and a bearing housing having a cylindrical accommodation space in which the shaft portion is accommodated. The bearing housing has a drain passage and a drain groove. The drain passage drains oil from the bearing housing. The oil is introduced into the accommodation space. The drain groove communicates the accommodation space with the drain passage. In a state where the turbocharger is mounted the internal combustion engine, the accommodation space is partitioned into two regions by an imaginary plane including a reference line and a central axis of the accommodation space, the reference line is an imaginary line segment that extends vertically downward from the central axis and connects the central axis with an outer periphery of the accommodation space. A first connecting portion at which the accommodation space is connected to the drain groove is provided in a vertically lower region with respect to the central axis within a downstream region when one of the two regions located within a region ahead of the reference line set as a start point in a rotational direction of the shaft portion is an upstream region and the other one of the regions is the downstream region. The drain groove linearly extends from the connecting portion toward the drain passage. An extension line and the central axis are skew lines, the extension line is an imaginary line that passes through a center of the drain groove along an extension direction of the drain groove. The extension line passes through a vertically upward region with respect to the central axis of the accommodation space within the downstream region.

With the above configuration, the connecting portion at which the drain groove is connected to the accommodation space is provided in the vertically lower region within the downstream region. Thus, oil introduced into the accommodation space is easily drained to the drain groove by the action of centrifugal force that is generated by the rotation of the shaft portion. Therefore, instable circulation of oil due to the action of centrifugal force that is generated by the rotation of the shaft portion is suppressed.

If the extension line and the central axis intersect with each other, the rotational direction of the shaft portion and the extension direction of the drain groove are orthogonal to each other at the connecting portion. In this case, oil is difficult to be drained from the accommodation space due to centrifugal force caused by the rotation of the shaft portion. In contrast, with the above configuration, the extension line of the drain groove and the central axis of the accommodation space are skew lines. That is, it is possible to reduce interference of centrifugal force with drainage of oil from the accommodation space to the drain groove. Thus, a stay of oil in the accommodation space is reduced, and oil is easily drained to the drain groove.

Furthermore, the extension line passes through the vertically upper region with respect to the central axis of the accommodation space within the downstream region. That is, the drain groove extends in the direction of a component included in the rotational direction of the shaft portion at the connecting portion. Thus, it is possible to utilize centrifugal force that is generated by the rotation of the shaft portion at the time when oil is drained to the drain groove, so it is possible to easily drain oil from the accommodation space to the drain groove.

With the above configuration, it is possible to easily drain oil from the bearing housing by utilizing not only gravity but also centrifugal force that is generated by the rotation of the shaft portion.

In the above turbocharger, the extension direction of the drain groove may be inclined from the downstream region toward the upstream region.

With the above configuration, the drain groove is inclined with respect to the reference line that is the boundary between the downstream region and the upstream region, that is, the drain groove is inclined with respect to the vertical direction. Since the inclined direction of the drain groove is oriented from the side behind in the rotational direction of the shaft portion toward the side ahead in the rotational direction of the shaft portion, the direction in which the resultant force of gravity and centrifugal force acts tends to coincide with the direction in which the drain groove is inclined. Thus, oil is further easily drained from the accommodation space to the drain groove.

In the above turbocharger, the drain passage may extend from a second connecting portion toward an oil flange of the bearing housing and may be open at the oil flange, the second connecting portion is a connecting portion at which the drain groove is connected to the drain passage. A passage cross-sectional area of the drain passage may be larger than a passage cross-sectional area of the drain groove.

With the above configuration, since the drain passage is wider than the drain groove, oil easily flows from the drain groove to the drain passage. For this reason, it is possible to easily drain oil from the bearing housing via the drain passage.

In the above turbocharger, a flange face at which the drain passage is open in the oil flange may be inclined with respect to a horizontal plane, and the extension direction of the drain passage and the flange face may be orthogonal to each other.

With the above configuration, the drain pipe, and the like, connected to the oil flange are allowed to be arranged so as to be oriented in the extension direction of the drain passage. At the time when oil passing through the drain passage flows into the drain pipe, and the like, interference with flow of oil is reduced.

A second aspect of the invention is an internal combustion engine. The internal combustion engine includes a first turbocharger. The first turbocharger includes a turbine wheel, a shaft portion coupled to the turbine wheel, and a bearing housing having a cylindrical accommodation space in which the shaft portion is accommodated. The bearing housing has a drain passage and a drain groove. The drain passage drains oil from the bearing housing. The oil is introduced into the accommodation space. The drain groove communicates the accommodation space with the drain passage . In a state where the first turbocharger is mounted the internal combustion engine, the accommodation space is partitioned into two regions by an imaginary plane including a reference line and a central axis of the accommodation space. The reference line is an imaginary line segment that extends vertically downward from the central axis and connects the central axis with an outer periphery of the accommodation space. A first connecting portion at which the accommodation space is connected to the drain groove is provided in a vertically lower region with respect to the central axis within a downstream region when one of the two regions located within a region ahead of the reference line set as a start point in a rotational direction of the shaft portion is an upstream region and the other one of the regions is the downstream region. The drain groove linearly extends from the first connecting portion toward the drain passage. An extension line and the central axis are skew lines. The extension line is an imaginary line that passes through a center of the drain groove along an extension direction of the drain groove. The extension line passes through a vertically upward region with respect to the central axis of the accommodation space within the downstream region. The extension direction of the drain groove is inclined from the downstream region toward the upstream region. The drain passage extends from a second connecting portion toward an oil flange of the bearing housing and is open at the oil flange. The second connecting portion is a connecting portion at which the drain groove is connected to the drain passage. A passage cross-sectional area of the drain passage is larger than a passage cross-sectional area of the drain groove. A flange face at which the drain passage is open in the oil flange is inclined with respect to a horizontal plane. The extension direction of the drain passage and the flange face are orthogonal to each other. The first turbocharger is provided such that the flange face faces a crankcase of the internal combustion engine. A drain pipe that is connected to the oil flange is extended toward the crankcase.

With the above configuration, the drain pipe may be arranged closer to the crankcase. Since an increase in the length of piping is suppressed, the turbocharger is allowed to be located closer to the internal combustion engine. This contributes to a reduction in the size of the turbocharged internal combustion engine, so it is possible to ensure space around the internal combustion engine.

In the above internal combustion engine, the internal combustion engine may be a V-internal combustion engine including a first bank and a second bank, in each of which a plurality of cylinders are arranged, a first turbocharger may be provided in correspondence with the first bank, a second turbocharger including symmetrical components to components of the turbocharger may be provided in correspondence with the second bank, a first turbine wheel of the first turbocharger and a second turbine wheel of the second turbocharger may be provided at the same side in an arrangement direction of the plurality of cylinders, and a rotational direction of the first turbine wheel may be opposite to a rotational direction of the second turbine wheel.

With the above configuration, each turbocharger provided in a corresponding one of the banks is allowed to be arranged closer to the bank. That is, although the V-internal combustion engine needs to have a large volume since the first bank and the second bank are provided, it is possible to reduce the size of the V-internal combustion engine.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view that shows a turbocharger for an internal combustion engine and an internal combustion engine according to an embodiment;
FIG. 2 is an overall view of the turbocharger according to the embodiment;
FIG. 3 is a plan view of a bearing housing of the turbocharger according to the embodiment when viewed from a turbine housing side;
FIG. 4 is a view that shows a cross-sectional structure taken along the line IV-IV in FIG. 3;
FIG. 5 is a plan view of the bearing housing of the turbocharger according to the embodiment when viewed from a compressor housing side;
FIG. 6 is a view that shows a cross-sectional structure taken along the line VI-VI in FIG. 2;
FIG. 7 is a schematic view that shows an accommodation space for the bearing housing of the turbocharger according to the embodiment;
FIG. 8 is a view that schematically shows part of the bearing housing shown in FIG. 5; and
FIG. 9 is a view that shows a turbocharger according to an alternative embodiment.

### DETAILED DESCRIPTION OF EMBODIMENTS

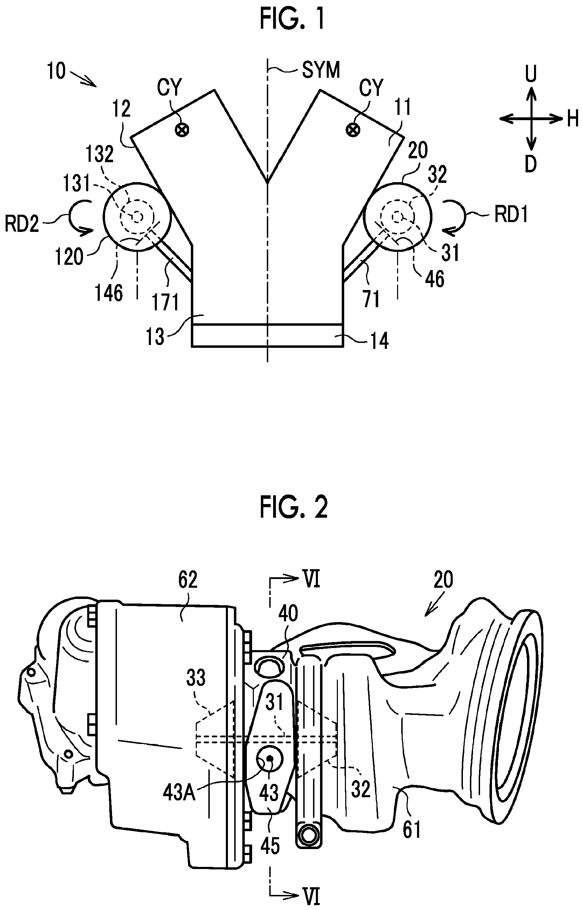

Hereinafter, a turbocharger and a turbocharged internal combustion engine according to an embodiment will be described with reference to FIG. 1 to FIG. 8. In FIG. 1 and FIG. 3 to FIG. 8, arrows that respectively indicate the upper side U and lower side D in a vertical direction and a horizontal direction H in position in which the internal combustion engine is mounted.

As shown in FIG. 1, the internal combustion engine 10 according to the present embodiment is a V-internal combustion engine including a first bank 11 and a second bank 12. A plurality of cylinders are provided in each of the first bank 11 and the second bank 12. The plurality of cylinders are arranged from the near side toward the far side in FIG. 1. In FIG. 1, arrows that respectively indicate cylinder arrangement directions CY are shown. An exhaust gas turbine first turbocharger 20 is arranged in correspondence with the first bank 11. The first turbocharger 20 supercharges intake air that is introduced into each of the cylinders of the first bank 11. An exhaust gas turbine second turbocharger 120 is arranged in correspondence with the second bank 12. the second turbocharger 120 supercharges intake air that is introduced into each of the cylinders of the second bank 12. The first turbocharger 20 is located on the outer side of the first bank 11 in the horizontal direction H, and the second turbocharger 120 is located on the outer side of the second bank 12 in the horizontal direction H.

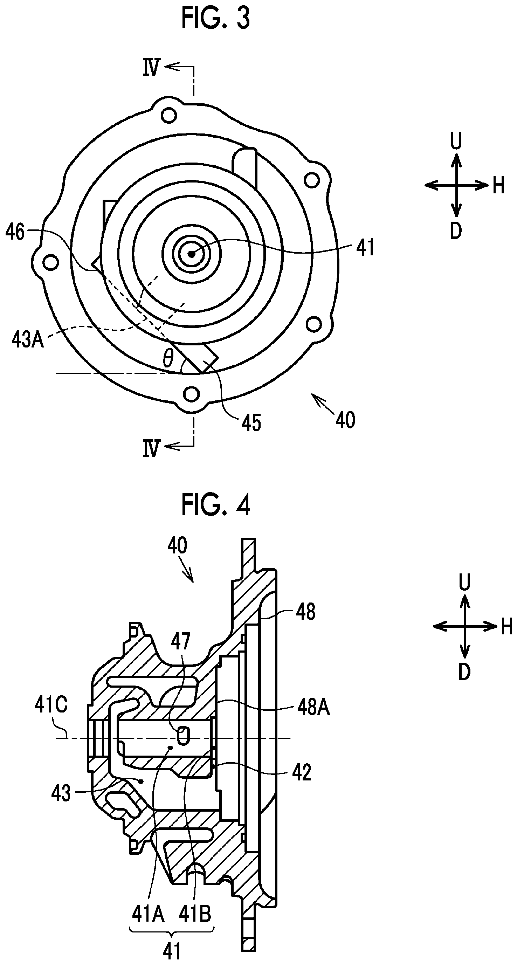

The first turbocharger 20 mounted on the internal combustion engine 10 will be described with reference to FIG. 2 to FIG. 6. FIG. 3 to FIG. 6 show a bearing housing 40 in the first turbocharger 20 in a state where the first turbocharger 20 is mounted on the internal combustion engine 10.

As shown in FIG. 2, the first turbocharger 20 includes a turbine housing 61 that accommodates a first turbine wheel 32. The first turbocharger 20 includes a compressor housing 62 that accommodates a first compressor wheel 33. The first turbine wheel 32 and the first compressor wheel 33 are fixed to a first shaft portion 31. Thus, the first turbine wheel 32 and the first compressor wheel 33 are coupled to each other. The first turbocharger 20 includes the bearing housing 40 that pivotally supports the first shaft portion 31. The bearing housing 40 is fastened to the turbine housing 61 and the compressor housing 62.

As shown in FIG. 4, the bearing housing 40 defines a cylindrical accommodation space 41 in which the first shaft portion 31 is accommodated. An inlet port 47 through which oil that lubricates the first shaft portion 31 for rotation is introduced is open to the accommodation space 41. The bearing housing 40 has a drain passage 43 that drains oil to the outside of the bearing housing 40. As shown in FIG. 2, the bearing housing 40 includes a first oil flange 45 that has an opening 43A of the drain passage 43.

As shown in FIG. 3, in the first oil flange 45, a first flange face 46 at which the opening 43A of the drain passage 43 is provided is inclined at an angle of θ with respect to the horizontal direction H. In the present embodiment, the angle θ is 45 degrees.

As shown in FIG. 4, the drain passage 43 is provided in a range on the lower side D with respect to the accommodation space 41 in the bearing housing 40. A recess 48 is provided at the compressor housing 62-side (right side in FIG. 4) end of the bearing housing 40. A bearing unit consisting of a bearing and a thrust collar is fitted to the recess 48. The recess 48 has such a stepped shape that its diameter is reduced toward the inner side of the bearing housing 40. The accommodation space 41 is open at a bottom 48A of the recess 48. The accommodation space 41 is formed of a small-diameter portion 41A and a large-diameter portion 41B. The small-diameter portion 41A extends in an extension direction of the first shaft portion 31 along a central axis 41C of the accommodation space 41. The large-diameter portion 41B has a larger size from the central axis 41C than the small-diameter portion 41A. The large-diameter portion 41B is located at the compressor housing 62-side end in the accommodation space 41.

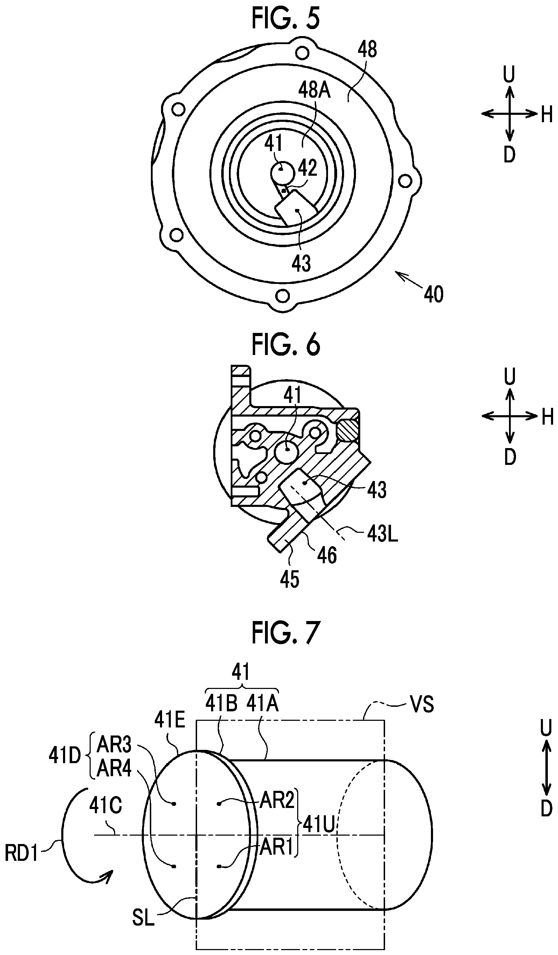

As shown in FIG. 4 and FIG. 5, the bearing housing 40 has a drain groove 42 that communicates the drain passage 43 with the accommodation space 41. The compressor housing 62 side of the drain groove 42 is open. When the bearing unit is fitted to the recess 48 of the bearing housing 40 and the bearing housing 40 and the compressor housing 62 are fastened to each other, the compressor housing 62 side of the drain groove 42 is closed. In this way, the drain groove 42 serves as a passage that communicates the drain passage 43 with the accommodation space 41.

As shown in FIG. 6, the drain passage 43 is open at the first oil flange 45 such that an extension line 43L along the extension direction of the drain passage 43 is orthogonal to the face direction of the first flange face 46.

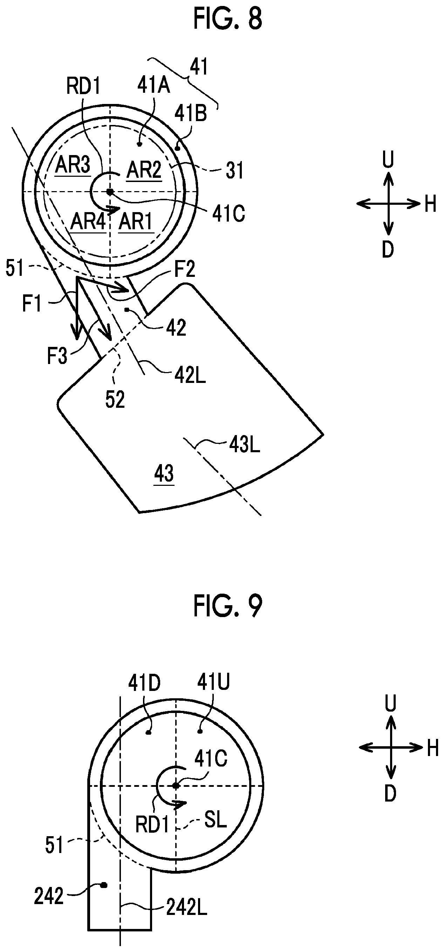

The accommodation space 41, the drain groove 42 and the drain passage 43 will be described with reference to FIG. 7 and FIG. 8. In FIG. 7 and FIG. 8, an arrow that indicates a rotational direction RD1 of the first shaft portion 31 is shown.

The accommodation space 41 is partitioned into four regions. As shown in FIG. 7, a line segment that extends from the central axis 41C of the accommodation space 41 toward the lower side D and that connects an outer periphery 41E of the accommodation space 41 with the central axis 41C is referred to as a reference line SL. FIG. 7 shows an imaginary plane VS including the reference line SL and the central axis 41C. Within the accommodation space 41 partitioned by the imaginary plane VS, a region ahead of the reference line SL set as a start point in the rotational direction RD1 is defined as an upstream region 41U. A region behind the reference line SL set as a start point in the rotational direction RD1 is defined as a downstream region 41D.

Within the upstream region 41U, a region on the lower side D with respect to the central axis 41C is defined as a first region AR1. Within the upstream region 41U, a region on the upper side U with respect to the central axis 41C is defined as a second region AR2. Within the downstream region 41D, a region on the upper side U with respect to the central axis 41C is defined as a third region AR3. Within the downstream region 41D, a region on the lower side D with respect to the central axis 41C is defined as a fourth region AR4.

As shown in FIG. 8, the drain groove 42 connects with the large-diameter portion 41B of the accommodation space 41. A first connecting portion 51 at which the accommodation space 41 and the drain groove 42 connect with each other is provided in the fourth region AR4. The first connecting portion 51 extends into the first region AR1.

The drain groove 42 linearly extends from the first connecting portion 51, and connects with the drain passage 43 at a second connecting portion 52. The passage cross-sectional area of the drain passage 43 is larger than the passage cross-sectional area of the drain groove 42. That is, in a drain direction of oil that flows from the accommodation space 41 to the opening 43A of the drain passage 43, the drain passage 43 having a larger width than the drain groove 42 is provided on the downstream side with respect to the second connecting portion 52.

An imaginary line that passes through the center of the drain groove 42 along the extension direction of the drain groove 42 is referred to as extension line 42L. At the first connecting portion 51, the extension line 42L is located on the outer side of the bearing housing 40 off-center to the downstream region 41D side from the central axis 41C. That is, at the first connecting portion 51, the extension line 42L is located in the fourth region AR4. Furthermore, the extension line 42L is inclined with respect to the reference line SL. That is, the extension line 42L is inclined with respect to the vertical direction. More specifically, the extension line 42L is inclined from the downstream region 41D toward the upstream region 41U over the range from the first connecting portion 51 to the second connecting portion 52. The extension line 42L passes through the third region AR3. For this reason, the extension line 42L and the central axis 41C do not intersect with each other, and are skew lines. The extension line 43L that is the extension direction of the drain passage 43 is inclined toward the upstream region 41U with respect to the extension line 42L of the drain groove 42.

As shown in FIG. 1, a mode in which the first turbocharger 20 and the second turbocharger 120 are arranged in the internal combustion engine 10 will be described. The first bank 11 and second bank 12 of the internal combustion engine 10 are inclined at a predetermined angle in a direction away from each other with respect to a plane SYM as a center.

The first turbocharger 20 and the second turbocharger 120 are plane-symmetrical with respect to the plane SYM as a symmetry plane. Hereinafter, the configuration of the first turbocharger 20 will be described, and, as for the configuration of the second turbocharger 120, the detailed description of members is omitted where appropriate. An arrow that indicates the rotational direction RD2 of a second shaft portion 131 of the second turbocharger 120 is shown in FIG. 1.

The first turbocharger 20 is arranged such that the first turbine wheel 32 is located on the near side in FIG. 1 and the first compressor wheel 33 is located on the far side in the arrangement direction CY of the cylinders. The first flange face 46 in the first oil flange 45 of the first turbocharger 20 is oriented toward a crankcase 13 of the internal combustion engine 10.

One end of a first drain pipe 71 is connected to the first oil flange 45. The first drain pipe 71 drains oil from the drain passage 43 to the crankcase 13. The first drain pipe 71 is arranged so as to extend orthogonally to the first flange face 46. The first drain pipe 71 is extended toward the crankcase 13 of the internal combustion engine 10, and the other end of the first drain pipe 71 is connected to the crankcase 13 of the internal combustion engine 10. Since the first flange face 46 is inclined at an angle of θ with respect to the horizontal direction H, the direction in which the first drain pipe 71 extends is inclined at an angle of θ with respect to the vertical direction.

The second turbocharger 120 is arranged such that a second turbine wheel 132 is located on the near side in FIG. 1 in the arrangement direction CY of the cylinders. A second flange face 146 in a second oil flange of the second turbocharger 120 is oriented toward the crankcase 13 of the internal combustion engine 10. The rotational direction RD2 is opposite to the rotational direction RD1 in the first turbocharger 20.

One end of a second drain pipe 171 is connected to the second oil flange, as in the case of the first turbocharger 20. The second drain pipe 171 drains oil. The other end of the second drain pipe 171 is connected to the crankcase 13 of the internal combustion engine 10.

Oil flowing into the crankcase 13 is stored in an oil pan 14 arranged at the lower side of the crankcase 13, and is introduced to the portions of the internal combustion engine 10 by being drawn up by an oil pump.

Next, the advantageous effects of the turbocharger and turbocharged internal combustion engine according to the present embodiment together with their operation will be described. As shown in FIG. 8, in the first turbocharger 20, oil that is drained from the accommodation space 41 receives gravity F1 at the first connecting portion 51. As the first turbine wheel 32 rotates, the first shaft portion 31 coupled to the first turbine wheel 32 rotates. A centrifugal force F2 is generated by the rotation of the first shaft portion 31. For this reason, oil that is drained from the accommodation space 41 receives centrifugal force F2. Therefore, the oil receives a resultant force F3 of the gravity F1 and the centrifugal force F2. FIG. 8 shows arrows that respectively indicate the directions of the gravity F1, centrifugal force F2 and resultant force F3.

If a drain groove is provided such that the extension line of the drain groove and the central axis 41C intersect with each other, the rotational direction RD1 of the first shaft portion 31 and the extension direction of the drain groove are orthogonal to each other at the first connecting portion 51. In this case, oil is difficult to be drained from the accommodation space 41 due to the centrifugal force F2 caused by the rotation of the first shaft portion 31.

In contrast, in the first turbocharger 20, the first connecting portion 51 is provided in the fourth region AR4 on the lower side D with respect to the central axis 41C within the downstream region 41D. The extension line 42L of the drain groove 42 and the central axis 41C of the accommodation space 41 are skew lines and do not intersect with each other. That is, it is possible to reduce interference of the centrifugal force F2 with drainage of oil from the accommodation space 41 to the drain groove 42. Thus, a stay of oil in the accommodation space 41 is reduced, and oil is easily drained to the drain groove 42. Therefore, instable circulation of oil due to the action of the centrifugal force F2 is suppressed.

Furthermore, the drain groove 42 is inclined with respect to the reference line SL that is the boundary between the downstream region 41D and the upstream region 41U, that is, the drain groove 42 is inclined with respect to the vertical direction. The inclined direction of the drain groove 42 is oriented from the side behind in the rotational direction of the first shaft portion 31 toward the side ahead in the rotational direction of the first shaft portion 31. That is, the drain groove 42 is extended such that the direction in which the resultant force F3 acts easily coincides with the extension direction of the drain groove 42. Thus, it is possible to utilize the centrifugal force F2 at the time when oil is drained from the accommodation space 41 to the drain groove 42, so it is possible to easily drain oil from the accommodation space 41 to the drain groove 42.

The drain groove 42 communicates with the drain passage 43 at the second connecting portion 52. The drain passage 43 has a larger width than the drain groove 42. Since oil easily flows toward the drain passage 43 having a larger passage cross-sectional area, a stay of oil at the time when oil is drained from the drain groove 42 to the drain passage 43 is reduced.

Furthermore, as shown in FIG. 3, the first flange face 46 of the first oil flange 45 having the opening 43A of the drain passage 43 is inclined at an angle of θ with respect to the horizontal plane. The extension line 43L of the drain passage 43 is orthogonal to the face direction of the first flange face 46. That is, the extension line 43L of the drain passage 43 is inclined with respect to the vertical direction. Since the drain passage 43 provided downstream of the drain groove 42 is inclined with respect to the vertical direction as in the case of the drain groove 42, oil is easily drained from the drain groove 42 to the drain passage 43.

As shown in FIG. 1, in the internal combustion engine 10, the first drain pipe 71 is arranged so as to extend orthogonally to the first flange face 46. That is, since the first drain pipe 71 is arranged so as to be oriented in the extension direction of the drain passage 43, a path through which oil is drained has a linear shape over the range from the drain passage 43 to the first drain pipe 71. Thus, a stay of oil that is drained from the bearing housing 40 is reduced.

Furthermore, in the internal combustion engine 10, the first turbocharger 20 is mounted such that the first flange face 46 of the first turbocharger 20 is inclined with respect to the horizontal plane and the first flange face 46 faces the crankcase 13. If the first flange face 46 is set in the horizontal plane, the drain pipe that is connected to the oil flange is extended toward the lower side D as indicated by the alternate long and two-short dashes line in FIG. 1 in order to form the path between the drain passage and the drain pipe into a linear shape. In contrast, when the first flange face 46 is inclined, the first drain pipe 71 is allowed to be oriented to the crankcase 13, so an increase in the length of the first drain pipe 71 is suppressed. That is, in the internal combustion engine 10, an increase in the length of piping is suppressed while the path through which oil is drained from the bearing housing 40 is formed into a linear shape. Since the length of the first drain pipe 71 is reduced, the first turbocharger 20 is allowed to be installed closer to the internal combustion engine 10. This contributes to a reduction in the size of the internal combustion engine 10, so it is possible to ensure space around the internal combustion engine 10. If the first drain pipe 71 is long, oil that passes through the first drain pipe 71 is easy to change under the influence of outside air temperature. In terms of this point, since the length of the first drain pipe 71 is reduced in the internal combustion engine 10, it is possible to reduce the influence of outside air temperature on oil.

Since the second turbocharger 120 includes symmetrical components to those of the first turbocharger 20, similar advantageous effects to those of the first turbocharger 20 are obtained. In addition, the internal combustion engine 10 that is the V-internal combustion engine includes the first turbocharger 20 for the first bank 11 and includes the second turbocharger 120 for the second bank 12. Since the rotational direction RD2 is opposite to the rotational direction RD1, an increase in the length of the second drain pipe 171 arranged between the second turbocharger 120 and the crankcase 13 is suppressed, as in the case of the first drain pipe 71. Thus, the first turbocharger 20 is allowed to be arranged closer to the first bank 11, and the second turbocharger 120 is allowed to be arranged closer to the second bank 12. That is, it is possible to reduce the size of the V-internal combustion engine 10 that must be large in volume in order to include the first bank 11 and the second bank 12.

The above-described embodiment may be modified as needed into the following modes. The following modes associated with the first turbocharger 20 may also be applied to the second turbocharger 120.

In the above-described embodiment, two turbochargers, that is, the first turbocharger 20 and the second turbocharger 120, are arranged in the V-internal combustion engine 10. The number of turbochargers that are arranged in the internal combustion engine 10 does not always need to be two.

The internal combustion engine 10 is not limited to the V-internal combustion engine. The first turbocharger 20 or the second turbocharger 120 may be employed in an in-line internal combustion engine. FIG. 1 illustrates the first drain pipe 71 extending linearly from the first flange face 46 to the crankcase 13 and the second drain pipe 171 extending linearly from the second flange face 146 to the crankcase 13. Each of the first drain pipe 71 and the second drain pipe 171 may include a portion that extends in the vertical direction.

In the above-described embodiment, the first oil flange 45 and the first drain pipe 71 are connected to each other such that the first drain pipe 71 is orthogonal to the face direction of the first flange face 46; however, the mode of connection is not specifically limited. The angle of the first drain pipe 71 may be changed as needed such that the extension direction is inclined with respect to the first flange face 46 of the first oil flange 45. This also applies to the second drain pipe 171.

In the above-described embodiment, the drain passage 43 is formed such that the extension line 43L that is the extension direction of the drain passage 43 is orthogonal to the face direction of the first flange face 46; however, the angle of the extension line 43L with respect to the first flange face 46 is not specifically limited. The angle of the drain passage 43 may be changed as needed such that the extension line 43L is inclined with respect to the first flange face 46.

In the above-described embodiment, the extension line 42L that is the extension direction of the drain groove 42 and the extension line 43L that is the extension direction of the drain passage 43 do not coincide with each other. In contrast, the drain groove 42 and the drain passage 43 may be formed such that the extension line 42L and the extension line 43L coincide with each other. When the extension line 42L of the drain groove 42 and the extension line 43L of the drain passage 43 coincide with each other, the path of oil over the range from the drain groove 42 to the drain passage 43 is formed in a linear shape. Therefore, a stay of oil in the first connecting portion 51 is further reduced.

In the above-described embodiment, the passage cross-sectional area of the drain passage 43 is set so as to be larger than the passage cross-sectional area of the drain groove 42; however, the relation between the passage cross-sectional areas are not limited to this relation. For example, the passage cross-sectional area of the drain passage 43 may be set so as to be equal to the passage cross-sectional area of the drain groove 42. The passage cross-sectional area of the drain groove 42 may be larger than the passage cross-sectional area of the drain passage 43.

The drain passage 43 may include a relay portion that the drain groove 42-side end of the drain passage 43 extends toward the drain groove 42, the relay portion of the drain passage 43 may be communicated with the drain groove 42 to allow oil to flow therethrough, and a portion downstream of the relay portion in the oil drain direction may be defined as a body portion of the drain passage 43. The passage cross-sectional area of the relay portion may be larger than the passage cross-sectional area of the drain groove 42 or may be equal to the passage cross-sectional area of the drain groove 42. The passage cross-sectional area of the relay portion may be gradually increased from the drain groove 42 side toward the body portion of the drain passage 43. A line along the extension direction of the relay portion may be different from the extension line 43L of the body portion of the drain passage 43. That is, the mode of inclination may be varied between the drain groove 42 and the relay portion and body portion of the drain passage 43.

The angle θ that is the inclination angle of the first flange face 46 with respect to the horizontal direction H is not limited to 45 degrees and may be changed as needed. The first flange face 46 may be provided horizontally. In this way, the angle θ may be set to 0 degrees.

In the above-described embodiment, the drain groove 42 is connected to the large-diameter portion 41B of the accommodation space 41; however, the connecting position is not specifically limited. For example, the drain groove 42 may be connected to the small-diameter portion 41A or may be connected so as to stride between the large-diameter portion 41B and the small-diameter portion 41A.

The spatial configuration of the accommodation space 41 is not specifically limited. For example, the large-diameter portion 41B may be omitted or a portion having a larger diameter than the large-diameter portion 41B may be provided. Arrangement of the large-diameter portion 41B may also be changed in the extension direction of the central axis 41C in the accommodation space 41.

The passage cross-sectional area of the drain groove 42 in the above-described embodiment may be increased. For example, the size of the drain groove 42 in the extension direction of the central axis 41C may be increased. The width of the drain groove 42 may be increased by increasing the circumferential length of the drain groove 42 at the first connecting portion 51. Even when the extension line 42L is located in the first region AR1 in the first connecting portion 51 as a result of an increase in the width of the drain groove 42, but when part of the first connecting portion 51 is located in the fourth region AR4, the drain groove 42 is regarded as being connected to the fourth region AR4. By increasing the width of the drain groove 42, it is possible to improve the efficiency of drainage of oil from the accommodation space 41.

In the above-described embodiment, the extension line 42L that is the extension direction of the drain groove 42 is inclined with respect to the reference line SL. Instead, for example, as shown in FIG. 9, a drain groove 242 may be provided such that an extension line 242L is parallel to the reference line SL. In this case as well, the extension line 242L is off-center to the downstream region 41D side from the central axis 41C. Therefore, the extension line 242L and the central axis 41C are skew lines. The lower side D that is the extension direction of the drain groove 242 belongs to a component included in the rotational direction RD1 of the first shaft portion 31 at the first connecting portion 51.

Thus, a centrifugal force F2 that is generated by the rotation of the first shaft portion 31 is difficult to act in a direction in which oil stays and is easy to act in a direction in which oil is drained. Therefore, the centrifugal force F2 is difficult to interfere with drainage of oil from the accommodation space 41 to the drain groove 242. With such a configuration as well, oil is allowed to be easily drained from the accommodation space 41.

In the above-described embodiment, the extension direction of the drain groove 42 is defined such that the extension line 42L that is the extension direction of the drain groove 42 intersects with an imaginary line including the reference line SL on the lower side with respect to the central axis 41C; however, this configuration may be modified. For example, the extension direction of the drain groove 42 may be defined such that the position of the extension line 42L at the first connecting portion 51 is located in the fourth region AR4, the extension line 42L passes through the third region AR3 and the extension line 42L intersects with the imaginary line including the reference line SL on the upper side with respect to the central axis 41C.

The mode of inclination of the drain groove 42 with respect to the vertical direction is not limited to the mode of inclination in the above-described embodiment, and may be modified as needed. For example, the mode of inclination may be set in consideration of the centrifugal force F2 that is generated by the rotation of the first shaft portion 31. The centrifugal force F2 increases as the rotation speed of the first turbine wheel 32 increases. As the centrifugal force F2 increases, the direction in which the resultant force F3 acts gets closer to the horizontal direction H than to the lower side D. For this reason, when the mode of inclination of the extension line 42L of the drain groove 42 is set in response to the centrifugal force F2 that is estimated on the basis of the rotation speed of the first turbine wheel 32, which is assumed as the first turbocharger 20, oil is easily drained from the accommodation space 41 to the drain groove 42. The mode of inclination of the drain passage 43 and the mode of inclination of the first flange face 46 may also be changed on the basis of the rotation speed of the first turbine wheel 32 similarly.

## Claims

1. A turbocharger (20) for an internal combustion engine (10) comprising:
a turbine wheel (32);
a shaft portion (31) coupled to the turbine wheel (32); and
a bearing housing (40) having a cylindrical accommodation space (41) in which the shaft portion (31) is accommodated, wherein
the bearing housing (40) has a drain passage (43) and a drain groove (42), the drain passage (43) drains oil from the bearing housing (40), the oil is introduced into the accommodation space (41), the drain groove (42) communicates the accommodation space (41) with the drain passage (43),
in a state where the turbocharger (20) is mounted the internal combustion engine (10), the accommodation space (41) is partitioned into two regions by an imaginary plane (VS) including a reference line (SL) and a central axis (41C) of the accommodation space (41), the reference line (SL) is an imaginary line segment that extends vertically downward from the central axis (41C) and connects the central axis (41C) with an outer periphery (41E) of the accommodation space (41),
a first connecting portion (51) at which the accommodation space (41) is connected to the drain groove (42) is provided in a vertically lower region with respect to the central axis (41C) within a downstream region (41D) when one of the two regions located within a region ahead of the reference line (SL) set as a start point in a rotational direction of the shaft portion (31) is an upstream region (41U) and the other one of the regions is the downstream region (41D),
the drain groove (42) linearly extends from the first connecting portion (51) toward the drain passage (43),
an extension line (42L) and the central axis (41C) are skew lines, the extension line (42L) is an imaginary line that passes through a center of the drain groove (42) along an extension direction of the drain groove (42), and
the extension line (42L) passes through a vertically upward region with respect to the central axis (41C) of the accommodation space (41) within the downstream region.

2. The turbocharger (20) according to claim 1, wherein
the extension direction of the drain groove (42) is inclined from the downstream region toward the upstream region.

3. The turbocharger (20) according to claim 2, wherein
the drain passage (43) extends from a second connecting portion toward an oil flange (45) of the bearing housing (40) and is open at the oil flange (45), the second connecting portion (52) is a connecting portion at which the drain groove (42) is connected to the drain passage (43), and
a passage cross-sectional area of the drain passage (43) is larger than a passage cross-sectional area of the drain groove (42).

4. The turbocharger (20) according to claim 3, wherein
a flange face (46) at which the drain passage (43) is open in the oil flange (45) is inclined with respect to a horizontal plane, and
the extension direction of the drain passage (43) and the flange face (46) are orthogonal to each other.

5. A internal combustion engine (10) comprising:
a first turbocharger (20) including a turbine wheel (32), a shaft portion (31) coupled to the turbine wheel, and a bearing housing (40) having a cylindrical accommodation space in which the shaft portion is accommodated, wherein
the bearing housing (40) has a drain passage (43) and a drain groove (42), the drain passage (43) drains oil from the bearing housing (40), the oil is introduced into the accommodation space (41), the drain groove (42) communicates the accommodation space (41) with the drain passage (43),
in a state where the first turbocharger (20) is mounted the internal combustion engine (10), the accommodation space (41) is partitioned into two regions by an imaginary plane (VS) including a reference line (SL) and a central axis (41C) of the accommodation space (41), the reference line (SL) is an imaginary line segment that extends vertically downward from the central axis (41C) and connects the central axis (41C) with an outer periphery (41E) of the accommodation space (41),
a first connecting portion (51) at which the accommodation space (41) is connected to the drain groove (42) is provided in a vertically lower region with respect to the central axis (41C) within a downstream region (41D) when one of the two regions located within a region ahead of the reference line (SL) set as a start point in a rotational direction of the shaft portion (31) is an upstream region (41U) and the other one of the regions is the downstream region (41D),
the drain groove (42) linearly extends from the first connecting portion (51) toward the drain passage (43),
an extension line (42L) and the central axis (41C) are skew lines, the extension line (42L) is an imaginary line that passes through a center of the drain groove (42) along an extension direction of the drain groove (42),
the extension line (42L) passes through a vertically upward region with respect to the central axis (41C) of the accommodation space (41) within the downstream region,
the extension direction of the drain groove (42) is inclined from the downstream region toward the upstream region,
the drain passage (43) extends from a second connecting portion toward an oil flange (45) of the bearing housing (40) and is open at the oil flange (45), the second connecting portion (52) is a connecting portion at which the drain groove (42) is connected to the drain passage (43),
a passage cross-sectional area of the drain passage (43) is larger than a passage cross-sectional area of the drain groove (42),
a flange face (46) at which the drain passage (43) is open in the oil flange (45) is inclined with respect to a horizontal plane, and
the extension direction of the drain passage (43) and the flange face (46) are orthogonal to each other,
the first turbocharger (20) is provided such that the flange face (46) faces a crankcase (13) of the internal combustion engine (10), and
a drain pipe (71, 171) that is connected to the oil flange (45) is extended toward the crankcase (13).

6. The internal combustion engine (10) according to claim 5, wherein
the internal combustion engine (10) is a V-internal combustion engine including a first bank (11) and a second bank (12), in each of which a plurality of cylinders are arranged,
the first turbocharger (20) is provided in correspondence with the first bank (11),
a second turbocharger (120) including symmetrical components to components of the first turbocharger (20) is provided in correspondence with the second bank (12),
a first turbine wheel (32) of the first turbocharger (20) and a second turbine wheel (132) of the second turbocharger (120) are provided at the same side in an arrangement direction of the plurality of cylinders, and
a rotational direction of the first turbine wheel (32) is opposite to a rotational direction of the second turbine wheel (132).
